(19) Europäisches Patentamt / European Patent Office / Office européen des brevets

(11) **EP 4 170 468 A1**

(12) **DEMANDE DE BREVET EUROPEEN**

(43) Date de publication:
26.04.2023 Bulletin 2023/17

(21) Numéro de dépôt: 22203074.4

(22) Date de dépôt: 21.10.2022

(51) Classification Internationale des Brevets (IPC):
*G06F 3/01* *(2006.01)*

(52) Classification Coopérative des Brevets (CPC):
G06F 3/016

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 25.10.2021 FR 2111291

(71) Demandeur: **Commissariat à l'énergie atomique et aux énergies alternatives**
**75015 Paris (FR)**

(72) Inventeurs:
• **CASSET, Fabrice**
**38054 GRENOBLE (FR)**
• **LE MAGUERESSE, Romain**
**38054 GRENOBLE (FR)**

(74) Mandataire: **Cabinet Nony**
**11 rue Saint-Georges**
**75009 Paris (FR)**

(54) **INTERFACE HAPTIQUE A CHARNIERES SOUPLES**

(57) Interface haptique flexible (1) définissant une surface tactile (S) susceptible d'être contactée par un utilisateur, l'interface comportant :
• une pluralité d'éléments tactiles rigides (3) reliés par un support souple (4) formant au moins une charnière (40) s'étendant entre au moins deux éléments adjacents, et
• au contact de chaque élément (3), au moins un actionneur (5), les actionneurs (5) étant agencés pour transmettre une excitation mécanique aux éléments tactiles rigides (3) afin d'entraîner en vibration la charnière (40) située entre eux avec une amplitude de vibration (f) détectable tactilement.

[Fig 1]

Fig. 1

EP 4 170 468 A1

**Description**

**Domaine technique**

La présente invention concerne les interfaces homme-machine, et plus particulièrement celles produisant des effets haptiques.

**Technique antérieure**

Une interface haptique permet à l'utilisateur d'interagir avec l'environnement par le sens du toucher. L'effet haptique est aujourd'hui de plus en plus utilisé dans de nombreuses applications, par exemple sur un « Smartphone », lorsque celui-ci génère une légère vibration quand on appuie sur une touche affichée à l'écran pour simuler l'impression d'appuyer sur un bouton. Des applications haptiques existent aussi pour des dispositifs de réalité virtuelle ou augmentée, en particulier pour permettre une meilleure immersion dans les jeux vidéo. Les interfaces haptiques telles que les dalles tactiles, générant un effet haptique sur une surface tactile lorsqu'un utilisateur la contacte, peuvent notamment être intégrées à de nombreuses technologies comme des ordinateurs, tablettes et/ou smartphones.

Il est connu de générer des effets haptiques variés et relativement complexes sur une surface tactile rigide grâce à des transducteurs ultrasonores émettant des ondes ultrasonores qui se propagent sur la surface rigide.

Avec l'apparition sur le marché de produits commerciaux souples, tels que des téléphones portables pliables ou encore des téléviseurs enroulables, il est désirable de disposer d'interfaces haptiques flexibles pouvant s'intégrer à de tels produits.

L'usage d'un support souple simple portant des transducteurs ultrasonores est cependant limité car les ondes émises par les transducteurs sont en partie absorbées par le matériau souple ; l'effet haptique généré est alors difficilement perceptible par un utilisateur appliquant une pression avec son doigt ou sa main sur un tel support.

Il est par ailleurs connu d'utiliser un actionnement pneumatique pour générer des effets haptiques sur une structure souple. Le brevet US10240688B2 divulgue une interface haptique flexible comportant des actionneurs pneumatiques permettant de générer un effet de topologie.

L'article de Yu et al. « Skin-integrated wireless haptic interfaces for virtual and augmented reality » (Nature, 2019) divulgue une interface haptique flexible comportant des actionneurs magnétiques permettant de générer divers effets haptiques. Cependant, la résolution spatiale des effets haptiques obtenus avec une telle interface est relativement faible, et l'utilisation d'actionneurs magnétiques entraîne une consommation électrique élevée.

Enfin, des fluides non-newtoniens ont déjà été utilisés pour générer des effets haptiques simples tels que des effets de boutons et des effets de relief. L'article de Lochtefeld « Towards real organic user interfaces - using non-Newtonian fluids for self-actuated displays » (CHI13 workshop, 2013) décrit un dispositif haptique utilisant un fluide nonnewtonien rhéoépaississant pris entre deux feuilles souples posées sur un réseau fixe de haut-parleurs. Une topologie perceptible au doigt est générée lorsqu'une onde sonore se propage dans le fluide et le durcit localement.

**Exposé de l'invention**

Il existe un besoin pour perfectionner encore les interfaces haptiques flexibles, notamment afin de disposer d'une interface tactile capable de générer des effets haptiques variés et présentant une bonne résolution spatiale sur l'ensemble de l'interface.

**Résumé de l'invention**

L'invention vise à répondre à ce besoin, et elle y parvient, selon un premier de ses aspects, grâce à une interface haptique flexible définissant une surface tactile susceptible d'être contactée par un utilisateur, l'interface comportant :

- une pluralité d'éléments tactiles rigides reliés par un support souple formant au moins une charnière s'étendant entre au moins deux éléments adjacents, et
- au contact de chaque élément, au moins un actionneur, les actionneurs étant agencés pour transmettre une excitation mécanique aux éléments tactiles rigides afin d'entraîner en vibration la charnière située entre eux avec une amplitude de vibration détectable tactilement.

Par « détectable tactilement », il faut comprendre que l'amplitude de vibration de la charnière excède une amplitude de l'ordre de 1 micron sous une charge comprise entre 0,05 et 0,5 N.

Par « transmettre une excitation mécanique aux éléments », on entend induire une vibration des éléments avec une amplitude détectable tactilement, l'amplitude de vibration des éléments pouvant être différente de celle de la charnière, notamment plus faible.

Grâce à l'invention, on peut obtenir des effets haptiques présentant une relativement bonne résolution spatiale, car la vibration de la charnière participe, en complément de celle des éléments tactiles rigides excités, à l'effet haptique généré par l'interface haptique.

Ainsi, on bénéficie d'une interface haptique présentant une certaine souplesse, tout en offrant des effets haptiques variés générés avec une bonne résolution spatiale, notamment sans discontinuité notable entre les éléments excités, convenant à de nombreuses applications.

De préférence, l'interface comporte un circuit de commande configuré pour moduler les signaux envoyés aux actionneurs afin d'induire mécaniquement une vibration des éléments et des charnières et générer une sensation haptique sur la surface tactile.

La vibration des éléments et des charnières peut générer une variation de friction perceptible tactilement par un utilisateur déplaçant son doigt sur la surface tactile. Cet effet, encore appelé effet « squeeze-film », peut donner l'impression à l'utilisateur de toucher une surface présentant des reliefs, ou ayant différentes textures.

La vibration des éléments et des charnières peut encore générer une impulsion perceptible tactilement par un utilisateur exerçant un contact statique sur la surface tactile. Cet effet permet par exemple de donner l'impression à l'utilisateur d'appuyer sur un bouton.

Eléments tactiles rigides

L'invention n'est pas limitée à l'excitation d'éléments tactiles individuels d'un matériau particulier, ou ayant une forme particulière. Toutefois, certaines formes et certains matériaux peuvent faciliter la fabrication de l'interface.

Ainsi, au moins certains des éléments, mieux tous les éléments, peuvent avoir une forme générale polyédrique, de préférence parallélépipédique. Les éléments peuvent notamment se présenter sous la forme de lames rectangulaires, en particulier carrées, en vue de face.

Au moins certains des éléments, mieux tous les éléments, sont de préférence en un matériau relativement dur et répandu, tel que le verre, de préférence du verre borosilicate.

Au moins certains des éléments, mieux tous les éléments, ont de préférence une épaisseur sensiblement constante, de préférence comprise entre 50 microns et 5 mm, mieux entre 200 et 700 microns.

Au moins certains des éléments, mieux tous les éléments, peuvent présenter une surface d'au moins 1 cm$^2$, par exemple une surface supérieure de dimensions d'au moins 10 mm par au moins 15 mm, lorsque les éléments ont une forme de lame rectangulaire en vue de face.

Tous les éléments peuvent être identiques. En variante, on peut combiner, au sein de la même interface, des éléments tactiles individuels de tailles différentes, en fonction par exemple de leur localisation relativement à la surface tactile et/ ou de l'application.

Support et charnières

Par « support », on désigne toute structure mono- ou multicouche qui assure le maintien des éléments tactiles rigides en position, et leur cohésion au sein de l'interface haptique. Le support est de préférence formé d'un ou plusieurs matériau(x) polymérique(s), ce qui peut faciliter la fabrication et l'obtention de la souplesse recherchée pour l'interface haptique, tout en générant une déformation avec l'amplitude souhaitée au niveau des charnières.

Par « charnière », on désigne la portion flexible reliant deux éléments tactiles adjacents entre eux. Les charnières peuvent comporter une ou plusieurs couches selon la structure du support, les couches étant couplées mécaniquement dans leur vibration dans le cas d'une charnière multicouche.

Le support peut comporter du polycarbonate (PC), du polytéréphtalate d'éthylène (PET), du polynaphtalate d'éthylène (PEN), du polyétheréthercétone (PEEK), du KAPTON ou tout autre matériau adapté.

Le choix de l'épaisseur du support peut s'effectuer en fonction de la souplesse de celui-ci, plus le support étant mou, plus son épaisseur pouvant être grande tout en permettant de conserver la souplesse recherchée.

De préférence, le support est d'épaisseur sensiblement constante au niveau des charnières, l'épaisseur étant de préférence comprise entre 100 et 800 microns.

Le support peut présenter un module de Young équivalent compris entre 0.5 et 9 GPa, mieux entre 2 et 5 GPa.

Par « module de Young équivalent », il faut comprendre, pour un support multicouche, la moyenne des modules de Young des différentes couches pondérée par les épaisseurs desdites couches.

Les éléments tactiles sont avantageusement réalisés dans un matériau plus rigide que celui ou ceux du support. Le rapport du module de Young de chaque élément tactile à celui du support est par exemple supérieur ou égal à 8, mieux supérieur ou égal à 20, encore mieux supérieur ou égal à 50, plus préférentiellement compris entre 80 et 90, notamment égal à 85 environ.

Les éléments tactiles peuvent être intégrés au support de différentes façons, selon la structure du support.

Le support peut notamment comporter une couche porteuse et une couche de compensation de l'épaisseur des éléments. Cette couche de compensation s'étend entre les éléments, au-dessus de la couche porteuse.

La couche de compensation et la couche porteuse forment lorsque liées entre elles à leur interface entre deux éléments adjacent des charnières multicouche, notamment bicouche, entre ces éléments.

La couche porteuse peut aussi jouer un rôle de couche de protection des éléments tactiles et/ou des actionneurs dont ceux-ci sont munis.

De préférence, la couche porteuse présente une épaisseur sensiblement constante, de préférence comprise entre 50 nm et 500 microns, mieux entre 25 et 80 microns, par exemple $50\mu$m.

La couche porteuse peut assurer à elle-seule la tenue des éléments tactiles au sein de la structure haptique. La couche de compensation d'épaisseur peut aussi jouer ce rôle, en association avec la couche porteuse.

Les éléments tactiles peuvent être tous situés d'un même côté de la couche porteuse.

La couche de compensation est de préférence d'épaisseur sensiblement constante, de préférence comprise entre 100 microns et 5 cm, de préférence entre $500\mu$m et 5mm, par exemple 1mm.

Au moins une partie des éléments tactiles, de préférence tous les éléments tactiles, peuvent présenter une surface extérieure débouchant sur la surface tactile.

Cette surface extérieure des éléments tactiles peut venir à effleurement de la surface extérieure de la couche de compensation, la surface extérieure des éléments et celle de la couche de compensation définissant alors une surface sensiblement lisse qui peut servir de surface tactile pour l'interface.

L'utilisateur vient alors directement au contact des éléments tactiles lorsqu'il amène son doigt au contact de la surface tactile.

En variante, on peut recouvrir les éléments tactiles et la couche de compensation avec une couche de protection, qui peut être identique à la couche porteuse du support, ou non.

On peut ainsi obtenir des charnières comportant trois couches, lorsque la vibration de la couche de protection est couplée mécaniquement avec celle des couches sousjacentes.

L'épaisseur de la couche de protection est de préférence relativement faible, de manière à ne pas affecter outre mesure le ressenti de l'effet tactile au niveau des éléments.

Le support peut comporter des logements dans lesquels s'étendent au moins partiellement les éléments tactiles, ces derniers étant par exemple recouverts continûment par une feuille souple définissant la surface tactile.

Dans un exemple de réalisation, le support comporte une couche de réception des éléments tactiles, la couche de réception formant des logements en forme de cuvette, le support comportant également une couche de couverture des éléments, définie par exemple par la feuille souple précitée.

Dans cet exemple, on considère que la couche de couverture fait partie des charnières lorsque sa vibration est couplée à celle de la couche de réception sous-jacente dans les régions entre les éléments tactiles.

La couche de couverture permet notamment d'uniformiser extérieurement la surface tactile, et d'éviter des sensations tactiles parasites qui pourraient sinon survenir si l'utilisateur était au contact direct des éléments et/ou des régions avoisinantes, ces derniers pouvant former une surface hétérogène au toucher.

### Agencement des éléments tactiles

Les éléments tactiles peuvent être répartis de différentes façons sur le support, en fonction notamment de l'application.

L'espacement entre deux éléments adjacents peut être choisi en fonction de la souplesse du support et de son épaisseur, de manière à obtenir l'amplitude de vibration souhaitée pour la charnière tout en préservant la souplesse de l'ensemble.

Plus le support est mou et/ou plus son épaisseur est fine, plus les éléments peuvent être rapprochés tout en conservant une amplitude de vibration de la charnière suffisante pour être détectable tactilement.

De préférence, l'espacement entre deux éléments adjacents (mesuré bord à bord) est compris entre 1 et 10 mm, mieux entre 3 et 8mm.

De préférence, le support a un module d'Young équivalent compris entre 0.5 GPa et 8.5 GPa, et le rapport $e_c/L_c$ de l'épaisseur $e_c$ au niveau des charnières à l'espacement $L_c$ entre les deux éléments adjacents est compris entre 0.023 et 0.128. Cela permet d'obtenir de bons résultats pour l'interface haptique.

En particulier, le support peut avoir un module d'Young équivalent compris entre 0.5 GPa et 5 GPa, notamment de 2.2 GPa plus ou moins 20%, mieux 2.2 GPa plus ou moins 10%, et le rapport $e_c/L_c$ de l'épaisseur du support $e_c$ au niveau des charnières à l'espacement $L_c$ entre deux éléments adjacents peut être compris entre 0.03 et 0.08.

En variante, le rapport $e_c/L_c$ de l'épaisseur du support $e_c$ au niveau des charnières à l'espacement $L_c$ entre deux éléments adjacents peut être compris entre 0.03 et 0.1, notamment égal à 0.05 plus ou moins 20%, mieux 0.05 plus ou moins 10%, le module d'Young équivalent pouvant être compris entre 0.8 et 8.5 GPa.

Au moins une partie des éléments peuvent être agencés en lignes et/ou en colonnes, notamment sur un même plan quand le support est mis à plat, de préférence selon un réseau régulier.

En variante, les éléments sont disposés selon une répartition concentrique, ou autre.

Actionneurs

Chaque élément tactile peut être muni d'au moins un actionneur s'étendant sur au moins une face de l'élément, par exemple la face située du côté du support et/ou sa face opposée. L'actionneur peut être disposé sur un ventre de vibration de l'élément.

Chaque actionneur peut être de type piézoélectrique, ferroélectrique, électromagnétique ou thermique, de préférence de type piézoélectrique. En particulier, chaque actionneur peut être piézoélectrique céramique.

De préférence, on choisit la forme et l'agencement des actionneurs de manière à obtenir le ou les modes de vibration désirés sur l'élément tactile.

Le ou les actionneurs associés à un élément tactile peuvent avoir chacun une forme allongée, de préférence selon la largeur de l'élément dans le cas où celui-ci présente une forme rectangulaire.

Le ou les actionneurs peuvent être disposés de part et d'autre d'un plan médian de l'élément tactile. Le ou les actionneurs peuvent être disposés au niveau de noeuds ou de ventres de vibration.

Les actionneurs peuvent être de formes diverses ; ils ont par exemple chacun une forme générale polygonale, notamment rectangulaire ou carrée, ou encore une forme circulaire ou annulaire.

On peut encore combiner plusieurs formes d'actionneurs sur un même élément tactile afin de pouvoir générer plusieurs modes de vibration différents, par exemple alternativement, ce qui permet d'obtenir des effets haptiques variés

L'invention a encore pour objet, indépendamment ou pris en combinaison avec ce qui précède, une interface haptique comportant au moins un élément tactile rigide, de préférence de forme rectangulaire en vue de face, comportant :

- un premier actionneur, de préférence de forme annulaire, disposé de préférence au centre de l'élément et pouvant générer un premier mode de vibration sur l'élément tactile, notamment un mode de flexion,
- au moins un actionneur, de préférence de forme allongée, notamment allongée selon la largeur de l'élément si celui-ci est de forme rectangulaire, disposés de préférence à des extrémités opposées de l'élément, et pouvant générer sur l'élément un deuxième mode de vibration différent du premier mode, notamment un mode oscillatoire de Lamb.

Systèmes annexes

L'interface peut comporter un système de détection d'un contact de l'utilisateur sur la surface tactile, notamment une structure de détection capacitive, qui est le cas échéant intégrée à la structure haptique.

L'interface peut comporter un système permettant de superposer au moins partiellement à la surface tactile une image. L'interface peut ainsi comporter un écran, de préférence un écran intégrant la structure haptique.

L'interface peut comporter au moins un actuateur permettant de conformer sélectivement l'interface selon au moins deux formes distinctes. Cela peut être utile par exemple pour changer la forme de l'interface en fonction de la sensation tactile à reproduire, pour améliorer par exemple la qualité de la simulation.

L'invention a encore pour objet un article vestimentaire équipé d'une interface haptique selon l'invention, telle que définie plus haut.

L'invention a encore pour objet un appareil mobile équipé d'une interface selon l'invention, telle que définie plus haut.

Procédé pour générer un effet haptique

L'invention a encore pour objet un procédé pour générer un effet haptique avec une interface haptique flexible telle que décrite ci-dessus, procédé dans lequel on excite mécaniquement des éléments tactiles rigides grâce aux actionneurs disposés au contact des éléments, afin d'entraîner en vibration la charnière située entre eux avec une amplitude de vibration détectable tactilement.

Les caractéristiques de l'interface décrite ci-dessus s'appliquent au procédé en combinaison ou individuellement les unes des autres.

Le procédé selon l'invention peut comporter une étape consistant à détecter d'abord la position du contact d'un utilisateur sur l'interface haptique grâce à un système de détection, puis moduler, grâce à un circuit de commande, des signaux envoyés aux actionneurs en fonction de la position détectée afin d'exciter les éléments.

On peut ainsi générer l'effet haptique désiré dans la zone de contact détectée.

Excitation des éléments tactiles rigides

L'invention n'est pas limitée à une excitation mécanique particulière des éléments tactiles rigides. Cependant, certains types d'excitation, et en particulier certains modes de vibration des éléments tactiles, facilitent la mise en vibration de la charnière située entre eux et permettent de générer des effets haptiques de manière relativement fiable.

Ainsi, on peut exciter mécaniquement les éléments tactiles rigides selon un premier mode de vibration dit « mode de flexion », notamment à une fréquence allant de 25 à 40 kHz, notamment d'environ 33 kHz, de manière à générer une flexion de la charnière située entre eux.

En variante, on peut exciter mécaniquement les éléments tactiles rigides selon un mode antisymétrique de Lamb, notamment à une fréquence comprise entre 55 et 100 kHz, par exemple d'environ 65 kHz.

Plus généralement, on excite mécaniquement les éléments tactiles rigides à une fréquence comprise de préférence entre 20 et 100 kHz.

L'invention a encore pour objet, un procédé pour générer une sensation haptique à l'aide d'une telle interface telle que définie ci-dessus, procédé dans lequel on excite sélectivement à un moment donné une partie des actionneurs seulement de manière à générer un mode de vibration prédéfini, notamment de flexion ou de Lamb ; on peut exciter alternativement les actuateurs pour passer d'un mode de flexion à un mode de Lamb et inversement ; on peut aussi exciter, lorsque l'interface comporte plusieurs tels éléments rigides dans différentes zones de l'interface, les actuateurs différemment selon les zones de l'interface, de telle sorte que dans certaines zones le mode vibratoire soit un mode de flexion et dans d'autres un mode de Lamb.

Réalisation d'un élément tactile individuel

On peut fabriquer un élément tactile individuel muni d'actionneurs de type piézoélectrique, utilisable dans une interface telle que définie plus haut, suivant le procédé comportant les étapes consistant à :

- Déposer, de préférence par sérigraphie, au moins une première couche d'un matériau conducteur sur la face supérieure d'un support rigide, de préférence un support en verre,
- fixer des actionneurs piézoélectriques sur la première couche ainsi formée, de façon à établir une première connexion électrique avec les actionneurs,
- déposer une couche d'un isolant sur les couches précédemment déposées,
- amincir la couche isolante afin d'exposer la face supérieure de chaque actionneur piézoélectrique,
- déposer une couche d'un matériau conducteur sur les actionneurs ainsi exposés, de façon à établir une deuxième connexion électrique avec les actionneurs,
- découper le support de manière à obtenir des éléments tactiles munis chacun d'un ou plusieurs actionneurs piézoélectriques.

Ce procédé permet notamment de fabriquer simplement plusieurs éléments tactiles à partir d'un même support, par exemple une plaque de verre.

Les éléments tactiles ainsi obtenus peuvent ensuite être rapportés sur un support souple pour former une interface haptique.

On fabrique par exemple une interface haptique telle que définie plus haut suivant le procédé comportant les étapes consistant à :

- Déposer une première couche en matériau souple, de préférence en polymère, sur un support de fabrication,
- fixer des éléments tactiles munis d'un ou plusieurs actionneurs sur la couche ainsi déposée, les actionneurs étant disposés sur la face extérieure des éléments,
- connecter électriquement chaque actionneur au circuit de commande, de préférence par masquage et pulvérisation d'un matériau conducteur,
- recouvrir les éléments tactiles et actionneurs par un matériau souple, de préférence un film polymère, et,
- séparer, notamment par pelage, l'ensemble ainsi réalisé du support de fabrication de manière à exposer la face inférieure de la première couche.

Cette première couche peut constituer la couche de couverture précitée, et le matériau souple déposé sur les éléments peut constituer la couche de réception précitée.

**Brève description des dessins**

L'invention pourra être mieux comprise à la lecture de la description détaillée qui va suivre, d'exemples de mise en oeuvre non limitatifs de celle-ci, et à l'examen des dessins annexés, sur lesquels :

[Fig 1] représente de manière partielle et schématique un exemple d'interface haptique selon l'invention,

[Fig 2] représente de manière partielle et schématique un exemple d'interface haptique comportant des éléments tactiles agencés en matrice,

[Fig 3] illustre de manière partielle et schématique en perspective une structure haptique comportant deux éléments tactiles reliés par une portion d'un support souple formant charnière,

[Fig 4a] illustre la mise en vibration de la charnière de la figure 3 à partir d'un mode de flexion des éléments tactiles,

[Fig 4b] illustre la mise en vibration de la charnière de la figure 3 à partir d'un mode de Lamb des éléments tactiles,

[Fig 5] illustre la possibilité de générer deux modes de vibration sur un élément tactile muni d'actionneurs piézoélectriques variés,

[Fig 6] représente de manière partielle et schématique une charnière souple située entre deux éléments et soumise au repos à une force verticale en son centre,

[Fig 7a] illustre de manière partielle et schématique un exemple d'intégration des éléments tactiles au sein de l'interface,

[Fig 7b] est une vue analogue à la figure 7a d'un autre exemple d'intégration des éléments tactiles,

[Fig 8] représente de manière partielle et schématique un exemple d'interface haptique équipée d'un système annexe,

[Fig 9] est un schéma en blocs illustrant un exemple de fonctionnement de l'interface haptique selon l'invention,

[Fig 10a] illustre de manière partielle et schématique la possibilité de générer un effet tactile de bouton à partir d'une interface selon l'invention,

[Fig 10b] illustre de manière partielle et schématique la possibilité de générer un effet tactile de relief à partir d'une interface selon l'invention,

[Fig 10c] illustre de manière partielle et schématique la possibilité de générer un effet tactile de texture à partir d'une interface selon l'invention,

[Fig 11], [Fig 12] et [Fig 13] illustrent de manière partielle et schématique des étapes successives d'un exemple de procédé de fabrication d'éléments tactiles avec leurs actionneurs,

[Fig 14], [Fig 15], [Fig 16] et [Fig 17] illustrent de manière partielle et schématique des étapes successives d'un exemple de procédé de fabrication d'une interface haptique,

[Fig 18a] représente un exemple d'article vestimentaire équipé d'une interface haptique flexible selon l'invention,

[Fig 18b] illustre un exemple d'appareil mobile équipé d'une interface haptique flexible selon l'invention, et

[Fig 19] illustre la possibilité de modifier la forme de l'interface à l'aide d'actuateurs.

**Description détaillée**

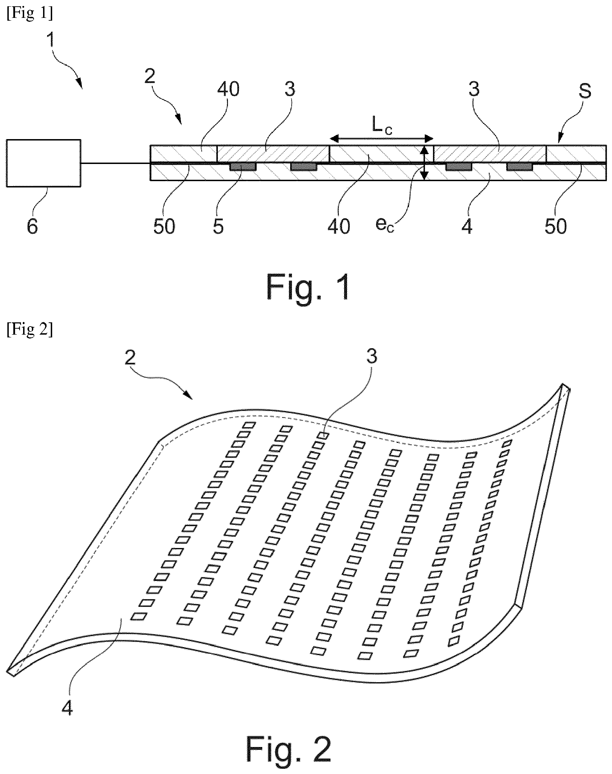

On a illustré à la figure 1 un exemple d'interface haptique flexible 1 utilisable pour la mise en œuvre du procédé selon l'invention. L'interface 1 comporte une structure haptique 2 définissant une surface tactile S susceptible d'être contactée par un utilisateur et sur laquelle un effet haptique peut être généré.

La structure haptique 2 comporte des éléments tactiles rigides 3 portés par un support souple 4. Les éléments tactiles 3 sont par exemple en verre, notamment en verre de borosilicate, ou en silicium.

Le support souple 4 forme des charnières 40 s'étendant entre les éléments tactiles 3.

Dans l'exemple considéré, les éléments tactiles 3 sont munis de plusieurs actionneurs 5, de préférence des actionneurs piézoélectriques, ces derniers étant reliés à un circuit de commande 6 grâce à des connexions électriques 50.

Le circuit de commande 6 est configuré pour moduler les signaux envoyés aux actionneurs 5 afin d'induire mécaniquement des vibrations à ceux-ci et d'exciter mécaniquement les éléments tactiles 3.

L'excitation de deux éléments tactiles 3 adjacents entraîne en vibration la charnière 40 située entre eux.

La disposition des éléments tactiles 3 sur le support souple, et en particulier l'espacement $L_c$ entre deux pixels adjacents, est choisie de manière à ce que lorsqu'on excite mécaniquement les éléments tactiles 3 grâce aux actionneurs 5, l'amplitude de vibration des charnières 40 résultante soit détectable tactilement.

Grâce à l'invention, on peut solliciter à la fois les charnières 40 et les éléments tactiles 3 pour générer l'effet haptique souhaité, ce qui permet d'obtenir, si cela est recherché, pour l'utilisateur en contact avec la surface tactile S une perception tactile sensiblement continue sur la zone de contact, et/ou d'une résolution accrue.

La structure haptique 2 peut être de toute forme, et de taille variée. Ses dimensions sont par exemple, en fonction de l'application, de l'ordre du cm, du dm ou du mètre.

Les éléments tactiles 3 peuvent présenter en vue de face une forme variée, par exemple rectangulaire, carrée, circulaire ou autre. Leur plus grande dimension est par exemple comprise entre quelques centaines de microns à quelques cm de côté, de préférence de 2mm à 1 cm de côté.

Les éléments tactiles 3 peuvent être répartis sur le support 4 selon des configurations diverses.

Par exemple, on a illustré à la figure 2 des éléments tactiles 3 identiques répartis en lignes et colonnes sur le support 4, selon un réseau régulier.

Dans d'autres modes de réalisation (non illustrés), l'interface 1 comporte des éléments tactiles de tailles et/ou de formes différentes, ou encore des éléments tactiles 3 disposés selon une répartition concentrique ou en quinconce.

On peut notamment jouer sur la taille des éléments tactiles afin de générer des effets haptiques simulant tactilement des motifs plus ou moins grands.

Les éléments tactiles 3 sont disposés sur le support 4 de manière à ce que la structure haptique 2 conserve une flexibilité d'ensemble selon au moins une direction, et mieux dans toutes les directions.

Toutefois, comme mentionné plus haut, cette disposition est soumise à certaines contraintes pour obtenir un effet perceptible tactilement par l'utilisateur. On considère qu'une vibration des charnières ou des éléments tactiles est perceptible tactilement lorsque son amplitude excède 1 micron sous une charge comprise entre 0,05 et 0,5 N.

L'amplitude de vibration d'un élément tactile 3 dépend, entre autres, de ses dimensions, de sa rigidité et du mode de vibration dans lequel il est activé.

L'amplitude de vibration d'une charnière souple 40 située entre deux éléments tactiles excités dépend par exemple de son épaisseur $e_c$, des caractéristiques du ou des matériaux constituant le support souple 4 au niveau de cette charnière, et de l'espacement $L_c$ entre les deux éléments.

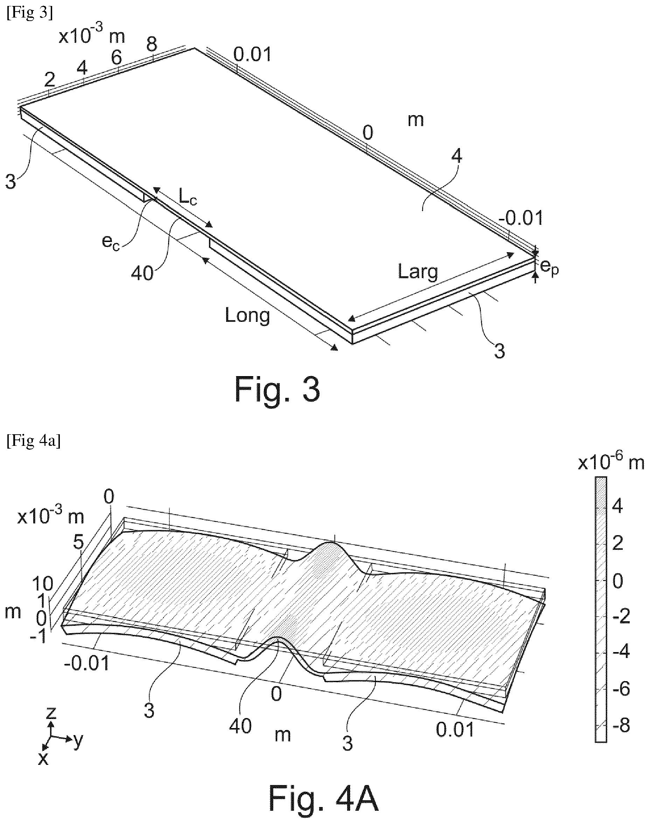

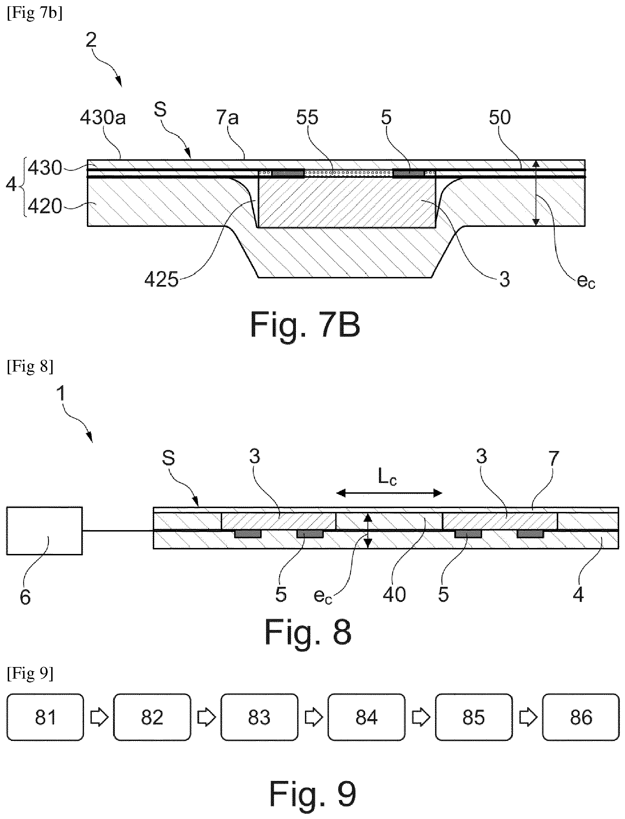

On va maintenant décrire, en référence aux figures 3 à 7a et 7b, un exemple de dimensionnement d'une charnière souple 40 située entre deux éléments tactiles rigides 3.

Comme illustré à la figure 3, on considère pour cet exemple deux éléments tactiles 3 portés par un support souple 4, la charnière étant formée par la portion du support qui s'étend entre les éléments 3.

Les éléments tactiles 3 sont identiques, par exemple en verre et en forme de lame rectangulaire de largeur *Larg* d'environ 10 mm, de longueur *Long* d'environ 15mm, et d'épaisseur $e_p$ d'environ 500 microns.

Le support souple 4 est par exemple une feuille de polymère d'épaisseur $e_c$, disposée sur les éléments 3 et formant entre eux une charnière souple 40 de largeur $L_c$ et de longueur environ égale à la largeur *Larg* des éléments 3.

Le support 4 est par exemple un polymère de masse volumique p, module d'Young E et coefficient de Poisson v.

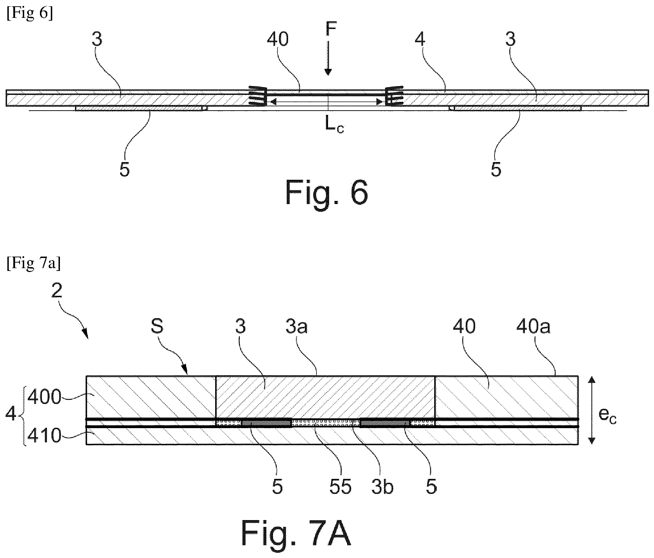

Les éléments tactiles 3 sont chacun munis d'un ou plusieurs actionneurs 5, comme visible sur la figure 7a. Grâce aux actionneurs 5, on peut faire vibrer les éléments tactiles 3 selon des modes de vibration adaptés à générer des effets haptiques au niveau de ceux-ci.

On excite par exemple les éléments tactiles 3 selon un premier mode de vibration appelé « mode de flexion », par exemple à une fréquence de 33 kHz. Les éléments tactiles 3 ainsi excités peuvent alors entraîner en flexion la charnière souple 40, comme illustré à la figure 4a. On obtient ainsi une surface S de la structure haptique 2 vibrant dans sa globalité, c'est-à-dire au niveau des charnières et des éléments tactiles 3.

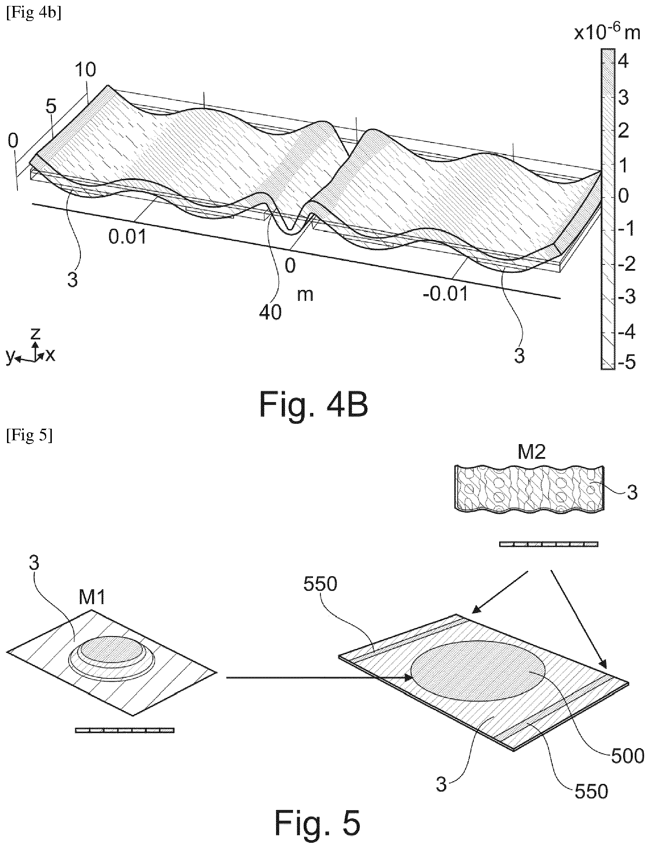

En variante, on excite les éléments tactiles 3 selon un mode antisymétrique de Lamb, par exemple un mode de Lamb à 65 kHz, entraînant, comme illustré à la figure 4b, la charnière souple 40 en vibration avec une amplitude supérieure à celle de la vibration des éléments tactiles 3.

Les modes de vibration tels que ceux qui viennent d'être décrits peuvent être obtenus en utilisant des actionneurs piézoélectriques, par exemple en titano-zirconate de plomb (PZT).

On peut adapter les dimensions des actionneurs et leur disposition sur les éléments tactiles 3 grâce à des simulations numériques, par exemple utilisant des méthodes de type éléments finis sur des logiciels commerciaux tels que COMSOL ou ANSYS.

On peut encore suivre la méthode décrite dans l'article de Casset, F., et al. « Low voltage actuated plate for haptic applications with PZT thin-film » (Proceedings of Transducers, 2013).

On peut par exemple disposer certains actionneurs 5 sur un élément tactile 3 de façon à pouvoir générer plusieurs modes de vibration, par exemple les deux modes de vibration précités, à savoir un mode M1 de flexion et un mode M2 de Lamb comme illustré sur la figure 5.

Dans cet exemple, l'élément tactile 3 est muni d'un actionneur 500 central de forme circulaire et de deux actionneurs 550 de forme allongée à ses extrémités, ceux-ci s'étendant dans la largeur *Larg* de l'actionneur.

On peut alimenter les actionneurs 500 et 550 à tour de rôle, par exemple par une différence de potentiel de 50V, afin d'exploiter un certain mode de vibration.

L'actionneur circulaire 500 permet par exemple d'exploiter le mode de flexion de l'élément tactile 3, tandis que les actionneurs 550 génèrent le mode de Lamb, par exemple à une fréquence de 50.7 kHz.

Ces deux modes de vibration permettent un déplacement d'au moins 1 micron au centre des éléments tactiles 3.

Bien entendu, d'autres configurations d'actionneurs sont possibles pour obtenir les modes de vibration souhaités. De préférence, on utilise des actionneurs rectangulaires pour obtenir un mode de Lamb, et des actionneurs carrés et/ou circulaires pour obtenir un mode hors plan tel que le mode de flexion.

Le support 4 étant de préférence formé d'un matériau polymérique, soit bien plus souple que les éléments tactiles 3, on obtient naturellement une amplitude de vibration des charnières 40 plus élevée que celle des éléments tactiles 3 qui sont rigides.

Toutefois, pour que les vibrations soient perceptibles tactilement, les charnières 40 doivent présenter une certaine rigidité de manière à pouvoir se déformer même lorsqu'elles sont soumises à une force exercée par l'utilisateur lors du contact.

Pour déterminer le matériau et les dimensions des charnières permettant un tel effet, on effectue par exemple une analyse statique en considérant la charnière comme une poutre élastique bi-encastrée soumise à un effort vertical F, tel qu'illustré à la figure 6 pour le système décrit plus haut.

Selon la théorie des poutres, l'équation de déformation de la charnière est donnée par :

$$FL_c^3 = 192\, E\, I_{gz} f$$

Avec $I_{gz} = Larg * \dfrac{e_c^3}{12}$ le moment quadratique de la charnière selon l'axe de déformation, *Larg* étant la longueur de la charnière, $e_c$ son épaisseur et $L_c$ sa largeur. *E* est le module d'Young de la charnière et *f* la déformation en son centre.

On considère dans cet exemple que l'effort F appliqué par le doigt sur la charnière est compris entre 0.05 N et 0.5 N, le seuil de détection tactile pour un doigt exerçant un effort normal sur une surface tactile étant d'environ 0.05 N, comme décrit dans l'article de King et al. « Perceptual Thresholds for Single vs. Multi-Finger Haptic Interaction » (2010 IEEE Haptics Symposium).

Ainsi, l'équation de déformation peut se réécrire en :

$$0.05\, N < F = \frac{192}{12}\, E\, Larg\, f\, \left(\frac{e_c}{L_c}\right)^3 < 0.5\, N$$

On a par exemple $f > 3\,\mu m$, soit plus de trois fois la déformation minimale détectable tactilement , et *Larg* = 10 mm.

A partir de l'équation ci-dessus, on peut déterminer les paramètres d'intérêt restants, à savoir le module d'Young de la charnière et ses dimensions $L_c$ et $e_c$, de différentes façons.

On impose par exemple le matériau à utiliser, et on obtient une règle de calcul pour le rapport $\dfrac{e_c}{L_c}$ .

On fixe par exemple un module d'Young équivalent E compris entre 0.5 GPa et 8.5 GPa de manière à englober plusieurs polymères.

En remplaçant dans l'équation de déformation établie ci-dessus, on peut obtenir les valeurs minimum et maximum des rapports $e_c/L_c$, c'est-à-dire correspondant à un effort normal de 0.05 N et 0.5 N, respectivement, comme résumé dans le tableau ci-dessous.

[Tableau 1]

| E (GPa) | $\dfrac{e_c}{L_c}$ pour 0.05 N | $\dfrac{e_c}{L_c}$ pour 0.5 N |
|---|---|---|
| 0.5 | 0.059 | 0.128 |
| 1 | 0.047 | 0.101 |
| 2.5 | 0.035 | 0.075 |
| 8 | 0.024 | 0.051 |
| 8.5 | 0.023 | 0.05 |

Ainsi on peut obtenir les valeurs minimales et maximales globales du rapport $e_c/L_c$ pour un module d'Young équivalent E compris entre 0.5 GPa et 8.5 GPa :

$$0.023 < \frac{e_c}{L_c} < 0.128$$

En particulier, pour un support dont le module d'Young équivalent est égal à 0.5 GPa, par exemple un polyéthylène (PE), le rapport $e_c/L_c$ est compris entre 0.059 et 0.128 ce qui permet, pour certaines longueurs de charnières, de déterminer les valeurs d'épaisseur minimale $e_{c_{min}}$ et maximale $e_{c_{max}}$. Le tableau ci-dessous résume de telles valeurs pour $L_c$ compris entre 1 et 7 mm.

[Tableau 2]

| $L_c$ (mm) | $e_{c_{min}}$ ($\mu$m) | $e_{c_{max}}$ ($\mu$m) |
|---|---|---|
| 1 | 59 | 128 |
| 2 | 119 | 255 |
| 3 | 178 | 383 |
| 4 | 237 | 511 |
| 5 | 296 | 639 |
| 6 | 356 | 766 |
| 7 | 415 | 895 |

Pour un support avec un module d'Young équivalent à 8.5 GPa, par exemple un composite constitué d'un polymère renforcé par des fibres de carbone ou de verre, le rapport $e_c/L_c$ est compris, comme indiqué dans le premier tableau, entre 0.023 et 0.050. Les valeurs suivantes pour l'épaisseur minimale et maximale de la charnière sont obtenues pour $Lc$ compris entre 2 et 8 mm :

[Tableau 3]

| $L_c$ (mm) | $e_{c_{min}}$ ($\mu$m) | $e_{c_{maxi}}$ ($\mu$m) |
|---|---|---|
| 2 | 46 | 99 |
| 3 | 69 | 149 |
| 4 | 92 | 199 |
| 5 | 115 | 248 |
| 6 | 138 | 298 |
| 7 | 161 | 348 |
| 8 | 184 | 397 |
| 9 | 207 | 447 |
| 10 | 231 | 497 |

Pour un support dont le module d'Young équivalent est égal à 2.5 GPa, par exemple un support de polycarbonate (PC), le rapport $\dfrac{e_c}{L_c}$ est compris entre 0.035 et 0.075 ce qui donne les valeurs résumées dans le tableau ci-dessous pour l'épaisseur minimale et maximale de la charnière avec $L_c$ compris entre 1 et 10 mm.

[Tableau 4]

| $L_c$ (mm) | $e_{c_{min}}$ ($\mu$m) | $e_{c_{maxi}}$ ($\mu$m) |
|---|---|---|
| 1 | 35 | 75 |
| 2 | 69 | 149 |
| 3 | 104 | 224 |
| 4 | 139 | 299 |
| 5 | 173 | 373 |
| 6 | 208 | 448 |

(suite)

| $L_c$ (mm) | $e_{c_{min}}$ (μm) | $e_{c_{maxi}}$ (μm) |
|---|---|---|
| 7 | 243 | 523 |
| 8 | 277 | 598 |
| 9 | 312 | 672 |
| 10 | 347 | 747 |

D'autres valeurs pour les dimensions de la charnière et/ou son module d'Young permettent d'obtenir l'effet haptique recherché. Par exemple, pour une largeur $L_c$ comprise entre 3 et 8mm et une épaisseur $e_c$ comprise entre 100 et 700 microns, on peut utiliser un film polymère de type polytéréphtalate d'éthylène (PET), par exemple un film Melinex® ou Mylar®, présentant un module d'Young d'environ 3.5 GPa, ou bien un film polymère de type polynaphtalate d'éthylène (PEN) avec un module d'Young d'environ 5 GPa.

L'intégration d'un élément tactile 3 au sein de la structure 2 peut se faire d'autres façons que celle qui vient d'être décrite.

Dans l'exemple illustré à la figure 7a, le support comporte un film porteur 410, qui peut servir de couche de protection, et une couche 400 de compensation de l'épaisseur des éléments 3.

Les éléments tactiles 3 sont portés par le film 410 et encastrés sur toute leur épaisseur dans la couche de compensation 400.

Dans l'exemple considéré, les charnières souples 40 sont bicouches ; elles comportent les portions des couches 400 et 410 situées dans les régions entre deux éléments adjacents 3, lesdites couches étant couplées mécaniquement dans leur vibration lorsque les éléments 3 sont excités. Les charnières 40 sont par exemple d'épaisseur $e_c$ inférieure ou égale à 800 microns.

Les éléments tactiles 3 présentent une surface extérieure 3a débouchant sur la surface tactile S. Comme illustré, les charnières 40 peuvent présenter une surface extérieure 40a venant à affleurement avec la surface extérieure 3a des éléments tactiles, pour former avec ceux-ci une surface lisse, qui est sensiblement plane lorsque la structure haptique 2 est mise à plat. La couche de compensation 400 peut présenter sensiblement la même épaisseur que les éléments tactiles 3.

L'utilisateur peut venir toucher directement la surface extérieure 3a des éléments tactiles 3 et/ou la surface 40a des charnières 40 de l'interface lorsqu'il amène son doigt au contact de la surface tactile S.

En variante, il est possible de recouvrir les éléments tactiles 3 et les charnières 40 avec une couche mince de protection (non représentée). Cela permet d'uniformiser la surface tactile, et d'éviter que l'utilisateur ne ressente un effet de texture non souhaité, dû à la différence entre le matériau des éléments et celui des charnières 40.

Dans l'exemple illustré à la figure 7a, les actionneurs 5 se situent de préférence sur la face 3b des éléments tactiles 3 située du côté du film porteur 410, comme illustré. Les éléments tactiles 3 munis des actionneurs 5 sont par exemple fixés au support 4 grâce à une colle isolante 55.

Dans la variante illustrée à la figure 7b, le support 4 comporte une couche 420 de réception des éléments 3 et une couche de couverture 430.

La couche de réception 420 forme des logements 425, en forme de cuvettes, venant accueillir chacun un élément tactile 3. La couche de couverture 430, par exemple une feuille souple de polymère, recouvre continûment la couche de réception 420 et les éléments tactiles 3, fermant ainsi supérieurement les logements 425.

La couche de couverture 430 sert par exemple également de feuille protectrice des éléments tactiles 3.

Dans l'exemple considéré, la face libre 430a de la couche de couverture 43 définit la surface tactile S. La couche de couverture 430 est suffisamment fine pour propager l'effet vibratoire des éléments tactiles 3 à la surface tactile S.

Dans cet exemple, les charnières 40 situées sont multicouches ; elles sont définies comme les portions du support 4 situées entre les éléments 3 et comportant les couches 420 et 430. Les charnières 40 sont par exemple d'épaisseur $e_c$ inférieure à 800 microns.

La couche de couverture 430 présente par exemple une épaisseur comprise entre quelques microns et quelques dizaines de microns.

Dans cette variante, les actionneurs 5 peuvent se situer indifféremment sur la face inférieure de l'élément 3, c'est-à-dire entre l'élément tactile 3 et le fond du logement 420 de la couche de réception 420, et/ou la face supérieure de l'élément tactile 3, c'est-dire entre l'élément tactile 3 et la couche de couverture 430.

Lorsque des actionneurs 5 sont présents sur les faces opposées d'un élément 3, leur excitation est de préférence contrôlée de manière à bénéficier d'interférences vibratoires constructives entre eux.

L'interface selon l'invention peut encore comporter, comme illustré à la figure 8, un système de détection 7, par exemple un système capacitif connu de l'état de l'art, permettant la détection d'au moins un point de contact du doigt de l'utilisateur avec la surface S.

Le système de détection a été représenté à la figure 8 de manière schématique sous la forme d'un organe recouvrant les éléments tactiles 3 et le support 4, mais il peut faire partie du support 4 ou être intégré aux éléments tactiles 3.

L'interface 1 peut en outre comporter un ou plusieurs dispositifs annexes permettant d'améliorer l'expérience utilisateur, notamment d'en faire une expérience multisensorielle.

L'interface 1 peut ainsi comporter un écran souple (non représenté) qui permet de superposer une image à la surface tactile S et de par exemple donner l'impression à l'utilisateur de toucher virtuellement ce qu'il observe sur l'écran. L'interface 1 peut encore comporter un ou plusieurs haut-parleurs (non représentés) pour adjoindre un effet sonore.

Une interface haptique 1 selon l'invention peut fonctionner selon les étapes décrites à la figure 9.

A l'étape 81, l'interface est en veille, en l'absence d'utilisateur en contact avec la surface tactile S, et les éléments tactiles 3 sont au repos.

A l'étape 82, le système de détection 6 détecte au moins un point de contact de l'utilisateur avec la surface S et le circuit de commande 6 détermine l'endroit où doit être généré(s) le ou les effets haptiques.

A l'étape 83, le circuit de commande 6 envoie les signaux de commande appropriés pour actionner au moins une partie des actionneurs 5 de façon à générer l'effet haptique désiré.

A l'étape 84, les actionneurs 5 concernés se contractent ou s'allongent par effet piézoélectrique inverse selon une amplitude d'actionnement correspondant au signal reçu, engendrant par effet unimorphe une vibration de l'élément rigide 3 avec lequel ils sont en contact. Les charnières 40 du support souple 4 situées entre deux éléments tactiles 3 excités sont entraînées en vibration à leur tour.

A l'étape 85, la vibration du ou des éléments tactiles induite par les actionneurs, ainsi que celle des charnières situées entre deux actionneurs activés, sont perçues tactilement par l'utilisateur sur la surface S.

A l'étape 86, l'utilisateur rompt le contact avec la surface tactile S et l'interface peut se remettre en veille, si l'on souhaite économiser l'énergie par exemple.

La perception tactile générée à l'étape 85 provient d'un ressenti d'une vibration des éléments tactiles 3 et des charnières 40, ce qui peut donner l'impression à l'utilisateur de toucher une surface vibrante ou présentant un relief.

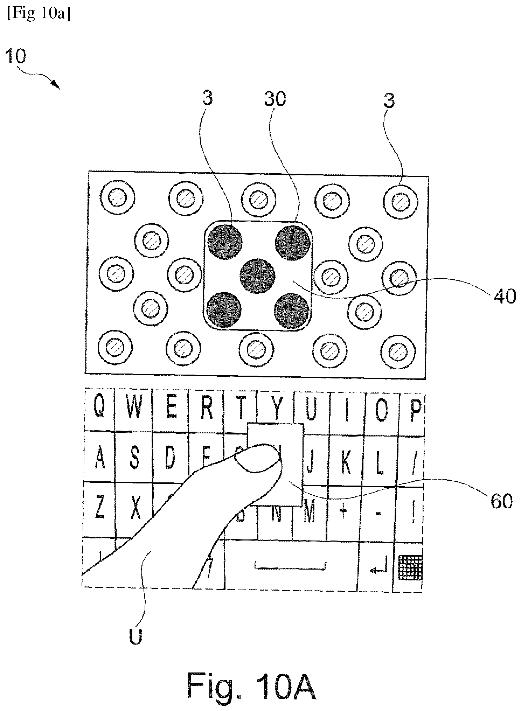

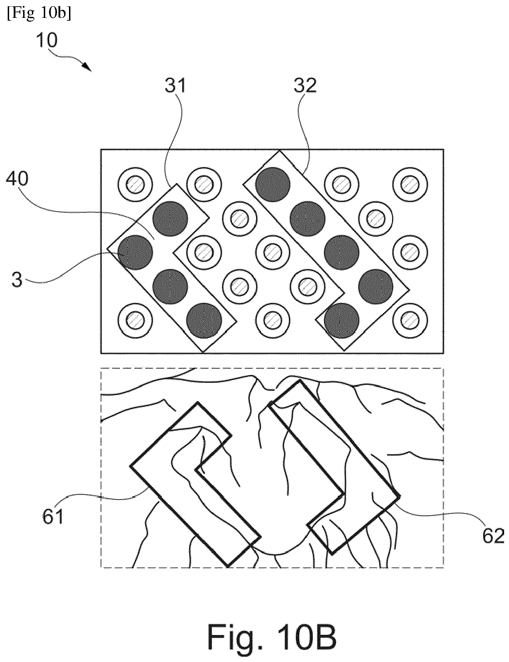

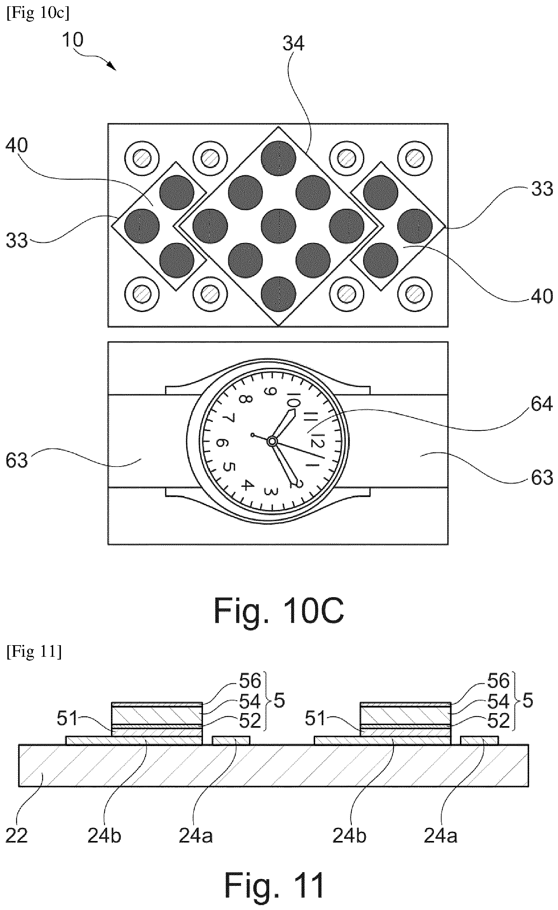

En actionnant plus ou moins d'éléments tactiles 3, il est possible de créer des effets relativement complexes. Certains sont décrits ci-dessous et illustrés sur les figures 10a, 10b et 10c.

On considère dans les exemples qui suivent une matrice 10 d'éléments tactiles 3 identiques, de forme circulaire et répartis de manière uniforme sur la matrice 10, en quinconce. Les éléments tactiles 3 comportent chacun un actionneur 5 placé en leur centre.

Dans l'exemple illustré à la figure 10a, un groupe 30 d'éléments tactiles 3 appartenant à la matrice 10 est actionné par le circuit de commande 6. L'ensemble du groupe 30, comportant les éléments tactiles 3 et les charnières 40, est mis en vibration de manière à transmettre à un utilisateur U exerçant un contact statique sur la surface une impulsion correspondant à une perception tactile 60 d'un « effet de bouton », c'est-à-dire donnant l'impression à l'utilisateur d'appuyer sur une touche de clavier.

Dans un autre exemple, illustré à la figure 10b, plusieurs groupes 31 et 32 comportant éléments tactiles 3 et charnières 40 sont mis en vibration simultanément ou alternativement afin de générer des perceptions tactiles 61 et 62 d'un effet de pseudo-relief, c'est-à-dire donnant l'impression à l'utilisateur qui déplace son doigt au contact de l'interface d'effleurer des reliefs, par exemple la crête d'une montagne d'une carte affichée sur un écran.

Dans un autre exemple, illustré à la figure 10c, des groupes 33 et 34 d'éléments tactiles 3 et les charnières 40 correspondantes sont excités simultanément ou alternativement afin de générer des perceptions tactiles 63 et 64 d'un effet de texture, c'est-à-dire donnant l'impression à l'utilisateur qui déplace son doigt au contact de l'interface de toucher la surface lisse 64 du cadran d'une montre ou la surface plus rugueuse 63 de son bracelet.

L'utilisateur, en déplaçant son doigt, peut percevoir une variation de friction, aussi appelée « effet squeeze-film », provenant des éléments tactiles 3 qui génèrent par exemple un mode ultrasonore ou une onde évanescente lorsqu'ils sont excités par les actionneurs 5.

Dans les exemples qui viennent d'être décrits, les éléments tactiles 3 d'un même groupe peuvent être activés selon un mode de vibration identique pour tous les éléments tactiles du groupe, ou propre à chaque élément tactile, selon l'effet recherché.

La déformation des charnières situées entre les éléments 3 activés dépend des modes de vibration choisis.

Des éléments tactiles 3 munis d'actionneurs 5 piézoélectriques peuvent être réalisés suivant les étapes illustrées aux figures 11 à 14 et décrites ci-dessous.

On dépose d'abord, par exemple par sérigraphie, une première couche 24 d'un matériau conducteur électrique, par exemple de l'or, sur la face supérieure d'une plaque rigide 22, notamment une plaque en verre,

La couche 24 est discontinue : elle comporte par exemple plusieurs sections 24a et 24b séparées qui forment les pistes d'alimentation électrique des actionneurs 5 qui viendront au contact des éléments tactiles 3.

L'épaisseur de la plaque 22 est par exemple de 500 microns. L'épaisseur de la couche 24 est par exemple de 300 nm.

On rapporte ensuite des actionneurs piézoélectriques 5 comportant par exemple une électrode inférieure 52, une couche piézoélectrique ou ferroélectrique 54 et une électrode supérieure 56. En variante, les actionneurs 5 ne comportent que la couche 54.

La couche 54 qui se situe entre les deux électrodes est par exemple de type titano-zirconate de plomb (PZT). Elle peut aussi être en nitrure d'aluminium (AlN), en oxyde de zinc (ZnO) ou tout autre matériau piézoélectrique ou ferroélectrique approprié. La couche 54 peut en outre être amincie et ajustée à l'épaisseur souhaitée.

On peut utiliser notamment une céramique piézoélectrique commerciale, ou former l'actionneur 5 par dépôt de couches minces et mise en forme sur la plaque 22, comme décrit dans le brevet FR3082997.

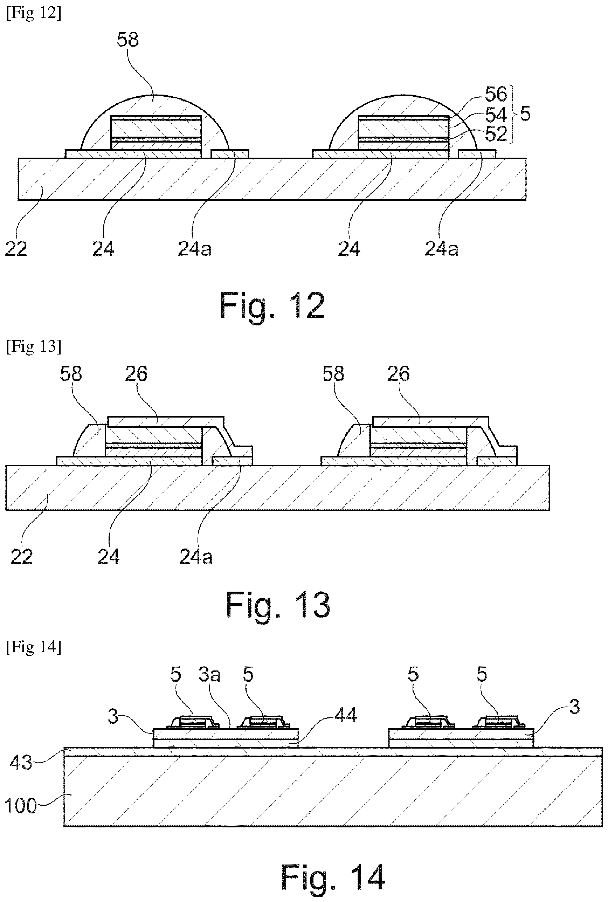

Comme illustré à la figure 12, l'électrode inférieure 52 des actionneurs piézoélectriques 5 peut être connectée à la piste 24 grâce à une couche de colle conductrice 51, par exemple une pâte d'argent, par exemple d'épaisseur de 40 μm environ. La déformation de la couche piézoélectrique 54 sous l'effet d'une différence de potentiel appliquée entre les électrodes est transmise à la plaque 22 par effet unimorphe dans la couche 51.

On recouvre ensuite chaque actionneur 5 avec une couche d'isolation électrique 58, par exemple faite d'un matériau polymère, afin de maintenir l'actionneur 5 et d'isoler les électrodes 52 et 56.

Seule une partie de la piste d'alimentation 24a reste découverte, comme illustré à la figure 12.

On amincit ensuite la couche isolante 58 par le haut afin de découvrir l'électrode 56, en vue de déposer, par impression à jet d'encre ou autre méthode adaptée, une couche de matériau conducteur 26 connectant l'électrode supérieure 56 avec la piste d'alimentation 24a, comme illustré à la figure 13.

En variante, on peut amincir la couche isolante 58 et la couche piézoélectrique 54 à l'épaisseur souhaitée, puis déposer une couche de matériau conducteur 26 formant à la fois l'électrode supérieure et la connexion vers la piste 24a. Le cas échéant, la couche 26 est obtenue par pochoir et pulvérisation d'or, et son épaisseur est par exemple de 300nm.

La plaque 22 peut ensuite être découpée afin d'obtenir des éléments tactiles 3 à la taille souhaitée, et munis du nombre d'actionneurs 5 prévus.

Les éléments tactiles 3 ainsi obtenus peuvent par la suite être reportés et fixés sur un substrat souple 4 pour former une structure haptique 2, suivant par exemple des étapes de réalisation décrites ci-dessous en référence aux figures 14 à 17. En particulier, une structure haptique telle que celle précédemment décrite en référence à la figure 7b peut être obtenue suivant les étapes qui suivent.

On place d'abord les éléments tactiles 3 aux endroits souhaités sur un support de fabrication 100, par exemple une plaque de silicone, sur lequel on aura au préalable formé une couche souple 42, par exemple de polymère SINR, notamment par lamination, destinée à former par exemple la couche de couverture précitée.

Les éléments tactiles 3 sont par exemple maintenus grâce à une couche 44 de colle rigide, par exemple de type époxy, par exemple d'une épaisseur de 40 microns, comme illustré à la figure 14.

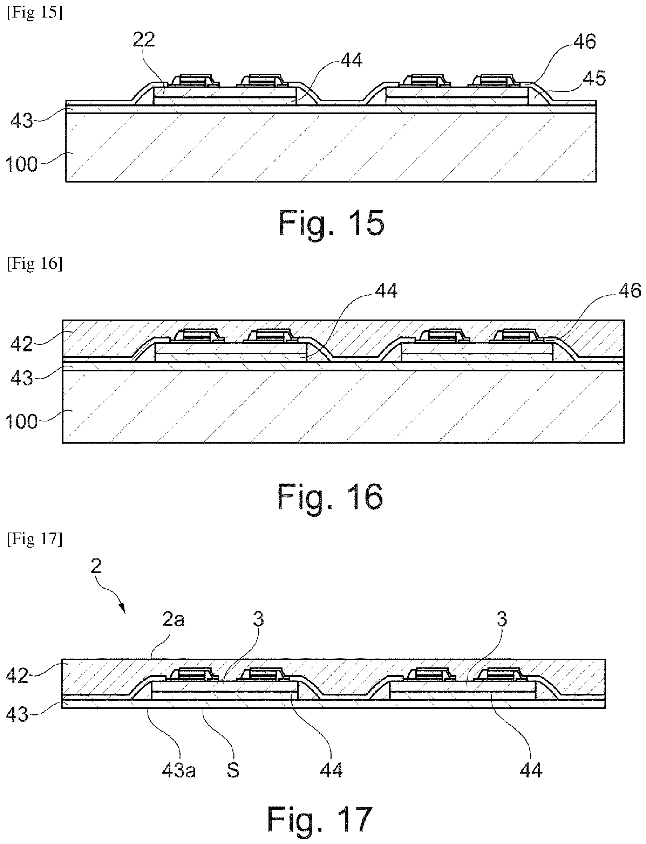

On dépose par la suite une couche de matériau conducteur 46, par exemple une couche d'or d'épaisseur 300nm obtenue par masquage et pulvérisation, afin de former la connectique électrique entre chaque actionneur 5 et le circuit de commande 6, tel qu'illustré à la figure 15.

Une couche 45 isolante, par exemple un cordon de polymère, peut avoir été déposée autour des éléments tactiles 3 au préalable.

On recouvre ensuite continûment, par exemple par laminage ou collage, l'ensemble des éléments tactiles 3 et de leurs actionneurs 5 par une couche 42, notamment un film de polymère mou, afin de former des ponts souples entre les éléments tactiles 3, comme illustré à la figure 16. La couche 42 est destinée à former la couche de réception précitée.

En variante, on peut enrober les éléments tactiles 3 par un polymère mou.

On retire enfin le support de fabrication par pelage afin d'exposer la couche de couverture 43, la surface exposée définissant la surface tactile S de l'interface haptique flexible. La surface tactile peut aussi, en variante, être définie par la surface supérieure 2a de la structure haptique.

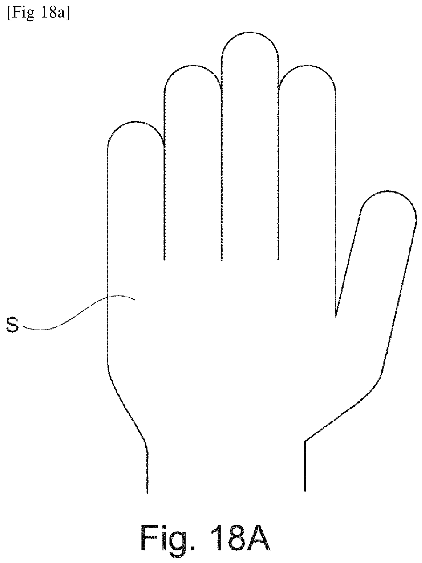

L'interface 1 selon l'invention peut être intégrée à un article vestimentaire, par exemple un gant, comme illustré à la figure 18a.

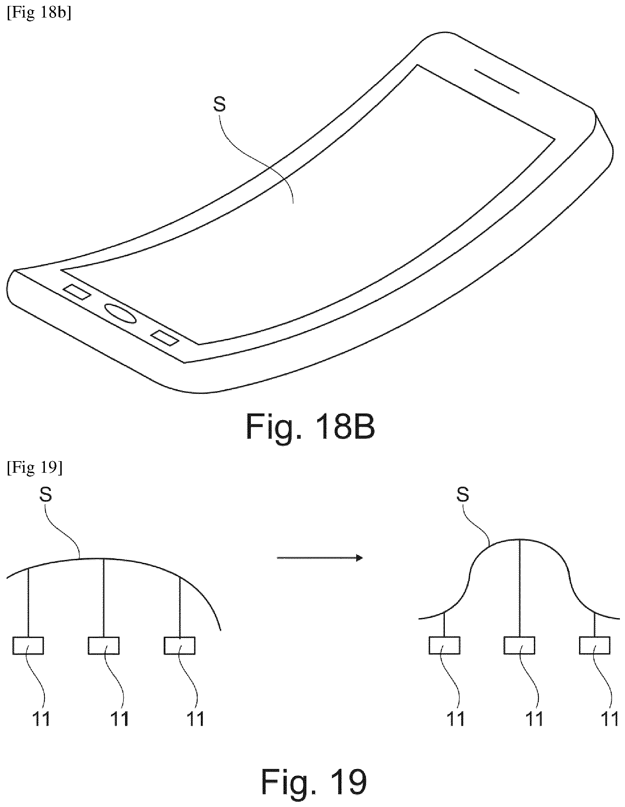

Elle peut en variante être intégrée à un appareil mobile, par exemple un téléphone flexible, comme illustré à la figure 18b.

La structure haptique 2 peut aussi, dans d'autres exemples, changer de forme selon l'effet haptique recherché, l'interface 1 pouvant compte-tenu de sa souplesse être un objet tangible reconfigurable, comme illustré à la figure 19. Sur cette figure, on voit que l'interface peut être couplée mécaniquement à un ou plusieurs actuateurs 11 qui permettent de la déformer pour lui donner une forme prédéfinie, correspondant à celle de l'objet que l'on cherche à simuler tactilement.

**EP 4 170 468 A1**

**Revendications**

1. Interface haptique flexible (1) définissant une surface tactile (S) susceptible d'être contactée par un utilisateur, l'interface comportant :

    • une pluralité d'éléments tactiles rigides (3) reliés par un support souple (4) formant au moins une charnière (40) s'étendant entre au moins deux éléments adjacents, et
    • au contact de chaque élément (3), au moins un actionneur (5), les actionneurs (5) étant agencés pour transmettre une excitation mécanique aux éléments tactiles rigides (3) afin d'entraîner en vibration la charnière (40) située entre eux avec une amplitude de vibration (f) détectable tactilement.

2. Interface haptique selon la revendication 1, le support (4) ayant un module d'Young équivalent compris entre 0.5 GPa et 8.5 GPa, et le rapport $e_c/L_c$ de l'épaisseur $e_c$ au niveau des charnières à l'espacement $L_c$ entre les deux éléments adjacents étant compris entre 0.023 et 0.128.

3. Interface haptique selon l'une quelconque des revendications précédentes, comportant un circuit de commande (6) configuré pour moduler les signaux envoyés aux actionneurs (5) afin d'induire mécaniquement une vibration des éléments (3) et des charnières (40) et générer une sensation haptique sur la surface tactile (S).

4. Interface haptique selon l'une quelconque des revendications précédentes, le support (4) étant formé d'un matériau polymérique.

5. Interface haptique selon l'une quelconque des revendications précédentes, le support (4) étant d'épaisseur ($e_c$) sensiblement constante au niveau des charnières (40), l'épaisseur étant de préférence comprise entre 100 et 800 microns.

6. Interface haptique selon l'une quelconque des revendications précédentes, le support (4) présentant un module de Young équivalent (E) compris entre 2 et 5 GPa.

7. Interface haptique selon l'une quelconque des revendications précédentes, l'espacement ($L_c$) entre deux éléments (3) adjacents étant compris entre 1 et 10 mm, mieux entre 3 et 8mm.

8. Interface haptique selon l'une quelconque des revendications précédentes, au moins certains des éléments (3), mieux tous les éléments, étant de forme générale polyédrique, de préférence parallélépipédique, en particulier de type lame rectangulaire.

9. Interface haptique selon l'une quelconque des revendications précédentes, au moins certains des éléments (3), mieux tous les éléments, ayant une épaisseur ($e_p$) sensiblement constante, de préférence comprise entre 50 microns et 5 mm, mieux entre 200 et 700 microns.

10. Interface haptique selon l'une quelconque des revendications précédentes, au moins certains des éléments (3), mieux tous les éléments, présentent une surface d'au moins 1 cm$^2$.

11. Interface haptique selon l'une quelconque des revendications précédentes, au moins une partie des éléments (3) étant agencés en lignes et/ou en colonnes, notamment sur un même plan quand l'interface est à plat, de préférence selon un réseau régulier.

12. Interface selon l'une quelconque des revendications précédentes, chaque élément (3) étant muni d'au moins un actionneur (5) s'étendant sur au moins une face de l'élément, l'actionneur étant disposé sur un ventre de vibration de l'élément.

13. Interface selon l'une quelconque des revendications précédentes, les actionneurs étant de type piézoélectrique, ferroélectrique, électromagnétique ou thermique, de préférence de type piézoélectrique.

14. Procédé pour générer un effet haptique avec une interface haptique flexible (1) selon l'une quelconque des revendications 1 à 13, procédé dans lequel on excite mécaniquement des éléments tactiles rigides (3) grâce aux actionneurs (5) disposés au contact des éléments, afin d'entraîner en vibration la charnière (40) située entre eux avec une amplitude de vibration (f) détectable tactilement.

**15.** Procédé selon la revendication précédente, dans lequel on détecte d'abord la position du contact d'un utilisateur sur l'interface haptique grâce à un système de détection (7), puis on module, grâce à un circuit de commande (6), des signaux envoyés aux actionneurs en fonction de la position détectée afin d'exciter les éléments.

**16.** Procédé selon l'une des revendications 14 ou 15, dans lequel on excite mécaniquement les éléments tactiles rigides (3) à une fréquence comprise entre 20 et 100 kHz.

[Fig 1]

Fig. 1

[Fig 2]

Fig. 2

[Fig 3]

Fig. 3

[Fig 4a]

Fig. 4A

[Fig 4b]

## Fig. 4B

[Fig 5]

## Fig. 5

[Fig 6]

Fig. 6

[Fig 7a]

Fig. 7A

[Fig 7b]

Fig. 7B

[Fig 8]

Fig. 8

[Fig 9]

| 81 | ⇨ | 82 | ⇨ | 83 | ⇨ | 84 | ⇨ | 85 | ⇨ | 86 |

Fig. 9

[Fig 10a]

Fig. 10A

[Fig 10b]

10

31    32

40

3

61    62

Fig. 10B

[Fig 10c]

10    34

40

33    33

40

Fig. 10C

[Fig 11]

56
54  5
52

51

56
54  5
52

51

22    24b    24a    24b    24a

Fig. 11

[Fig 12]

58

56
54  5
52

22    24    24a    24    24a

## Fig. 12

[Fig 13]

58    26    58    26

22    24    24a

## Fig. 13

[Fig 14]

5  3a  5    5    5

3    44    3

43

100

## Fig. 14

[Fig 15]

Fig. 15

[Fig 16]

Fig. 16

[Fig 17]

Fig. 17

[Fig 18a]

S

Fig. 18A

[Fig 18b]

# Fig. 18B

[Fig 19]

# Fig. 19

Europäisches
Patentamt

European
Patent Office

Office européen
des brevets

# RAPPORT DE RECHERCHE EUROPEENNE

Numéro de la demande

EP 22 20 3074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/005077 A1 (KIM HOON SIK [US] ET AL) 5 janvier 2017 (2017-01-05)<br>* abrégé; figures 1,2 *<br>* alinéas [0048], [0056], [0057], [0061], [0074] *<br>----- | 1-16 | INV.<br>G06F3/01 |
| X | EP 3 401 763 A1 (IMMERSION CORP [US]) 14 novembre 2018 (2018-11-14)<br>* abrégé; figures 1,7 *<br>* alinéas [0013], [0014], [0061], [0064], [0071] *<br>----- | 1-16 | |
| X | US 2012/229401 A1 (BIRNBAUM DAVID [US] ET AL) 13 septembre 2012 (2012-09-13)<br>* abrégé; figure 7 *<br>* alinéas [0038], [0042], [0043], [0050] *<br>----- | 1-16 | |
| X | US 2017/068318 A1 (MCCLURE STEPHEN R [US] ET AL) 9 mars 2017 (2017-03-09)<br>* abrégé; figure 20 *<br>* alinéas [0048], [0078], [0079] *<br>----- | 1-16 | DOMAINES TECHNIQUES RECHERCHES (IPC)<br><br>G06F |

Le présent rapport a été établi pour toutes les revendications

| Lieu de la recherche | Date d'achèvement de la recherche | Examinateur |
|---|---|---|
| Munich | 3 mars 2023 | Pfaffelhuber, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 170 468 A1**

## ANNEXE AU RAPPORT DE RECHERCHE EUROPEENNE
## RELATIF A LA DEMANDE DE BREVET EUROPEEN NO.

EP 22 20 3074

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2023

| Document brevet cité au rapport de recherche | Date de publication | Membre(s) de la famille de brevet(s) | Date de publication |
|---|---|---|---|
| US 2017005077 A1 | 05-01-2017 | CN 107710885 A | 16-02-2018 |
| | | CN 110177426 A | 27-08-2019 |
| | | EP 3318108 A1 | 09-05-2018 |
| | | JP 6546297 B2 | 17-07-2019 |
| | | JP 6857690 B2 | 14-04-2021 |
| | | JP 2018532250 A | 01-11-2018 |
| | | JP 2019194989 A | 07-11-2019 |
| | | KR 20180011812 A | 02-02-2018 |
| | | US 2017003440 A1 | 05-01-2017 |
| | | US 2017005077 A1 | 05-01-2017 |
| EP 3401763 A1 | 14-11-2018 | CN 108878470 A | 23-11-2018 |
| | | EP 3401763 A1 | 14-11-2018 |
| | | JP 2018198315 A | 13-12-2018 |
| | | KR 20180124741 A | 21-11-2018 |
| | | US 2018329493 A1 | 15-11-2018 |
| US 2012229401 A1 | 13-09-2012 | US 2012229401 A1 | 13-09-2012 |
| | | US 2013222310 A1 | 29-08-2013 |
| US 2017068318 A1 | 09-03-2017 | US 2017068318 A1 | 09-03-2017 |
| | | WO 2017044200 A1 | 16-03-2017 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10240688 B2

- FR 3082997

**Littérature non-brevet citée dans la description**

- **YU et al.** Skin-integrated wireless haptic interfaces for virtual and augmented reality. *Nature,* 2019

- **LOCHTEFELD.** Towards real organic user interfaces - using non-Newtonian fluids for self-actuated displays. *CHI13 workshop,* 2013